# EUROPEAN PATENT SPECIFICATION

(11) **EP 4 533 850 B1**
(45) Date of publication and mention of the grant of the patent: **04.11.2026**
(21) Application number: 23835799.0
(22) Date of filing: 04.07.2023
(51) Int. Cl.: H04W 28/02, H04W 28/06, H04W 72/21, H04W 72/566

(54) **ENHANCED METHOD OF BUFFER STATUS REPORTING**
VERBESSERTES VERFAHREN ZUR PUFFERSTATUSMELDUNG
PROCÉDÉ AMÉLIORÉ DE RAPPORT D'ÉTAT DE TAMPON

(30) Priority: 04.07.2022 KR 20220082031
(43) Date of publication of application: 09.04.2025
(73) Proprietor: Samsung Electronics Co., Ltd., Suwon-si, Gyeonggi-do 16677 (KR)
(72) Inventor: AGIWAL, Anil, Suwon-si, Gyeonggi-do 16677 (KR); KANG, Hyunjeong, Suwon-si, Gyeonggi-do 16677 (KR); LEE, Taeseop, Suwon-si, Gyeonggi-do 16677 (KR)
(74) Representative: HGF
(86) International application number: PCT/KR2023/009409
(87) International publication number: WO 2024/010333

(56) References cited:
- US-A1- 2013 301 547
- US-A1- 2018 041 410
- US-A1- 2022 070 880
- ALCATEL-LUCENT: "Dual Priority Requirements", vol. CT WG1, no. Chicago; 20120806 - 20120810, 29 July 2012 (2012-07-29), XP050772203, Retrieved from the Internet <URL:http://www.3gpp.org/ftp/tsg_ct/WG1_mm-cc-sm_ex-CN1/TSGC1_79_Chicago/docs/> [retrieved on 20120729]
- CATT: "Left Issues of BSR/SR", 3GPP DRAFT; R2-1912173, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Chongqing, P. R. China; 20191014 - 20191018, 3 October 2019 (2019-10-03), Mobile Competence Centre ; 650, route des Lucioles ; F-06921 Sophia-Antipolis Cedex ; France , pages 1 - 4, XP051790225
- ZTE, SANECHIPS: "Performance Evaluation Results for XR", 3GPP DRAFT; R1-2111351, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20211111 - 20211119, 5 November 2021 (2021-11-05), Mobile Competence Centre ; 650, route des Lucioles ; F-06921 Sophia-Antipolis Cedex ; France, XP052179418
- NTT DOCOMO, INC.: "Discussion on Procedure for Two-step RACH", 3GPP DRAFT; R1-1912870, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20191118 - 20191122, 8 November 2019 (2019-11-08), Mobile Competence Centre ; 650, route des Lucioles ; F-06921 Sophia-Antipolis Cedex ; France , XP051820218

## Description

### Technical Field

The disclosure relates to a wireless communication system. Specifically, the disclosure relates to, a method and a system for discontinuous reception in connected state.

### Background Art

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/ protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultrahigh-performance communication and computing resources.

5th generation (5G) or new radio (NR) mobile communications is recently gathering increased momentum with all the worldwide technical activities on the various candidate technologies from industry and academia. The candidate enablers for the 5G/NR mobile communications include massive antenna technologies, from legacy cellular frequency bands up to high frequencies, to provide beamforming gain and support increased capacity, new waveform (e.g., a new radio access technology (RAT)) to flexibly accommodate various services/applications with different requirements, new multiple access schemes to support massive connections, and so on.

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged. As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched. Such an IoT environment may provide intelligent Internet technology services that create a new value to human life by collecting and analysing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology.

### Disclosure of Invention

### Technical Problem

In the XR environment, since a logical channel with a low PDB has a high priority, logical channels with a high PDB are not scheduled in some cases and discarded after the PDB.

### Solution to Problem

The present invention is defined by the independent claims. Further aspects of the present invention are outlined in the dependent claims. In one embodiment, a method performed by a user equipment (UE) in a wireless communication system, the method comprising: transmitting, to a base station, a first message comprising capability information associated with buffer state reporting (BSR); receiving, from a base station, a second message comprising at least one condition of triggering the BSR for low priority data; identifying, whether the UE satisfies the at least one condition of triggering the BSR for low priority data; transmitting, to the base station, a third message comprising the BSR in case that it is satisfied with the at least one condition of triggering the BSR for low priority data.

In one embodiment the capability information comprises at least one of capability for supporting triggering the BSR for low priority data and capability for supporting a dual logical channel (LCH) priority.

In one embodiment wherein the second message further comprises configuration information on uplink scheduling, configuration information on a data radio bearer (DRB), configuration information on a logical channel (LCH) associated with the DRB, and information on dual logical channel(LCG) priority.

In one embodiment wherein the condition of triggering the BSR for low priority data comprises at least one parameter of a indicator being configured to trigger the BSR for low priority data, a threshold value associated with a transmitting time of a uplink data, and information on logical channel priority.

### Advantageous Effects of Invention

The present disclosure provides an effective and efficient method for buffer state reporting in a wireless communication system.

### Brief Description of Drawings

FIG. 1 illustrates a flowchart of a method illustrates a flowchart of a method associated with triggering buffer state reporting.
FIG. 2 illustrates a flowchart of a method associated with dual priority for a logical channel.
FIG. 3 illustrates a block diagram of a user equipment in a communication system provided by an embodiment of the present application.
FIG. 4 illustrates a block diagram of a base station in a communication system provided by an embodiment of the present application.

### Mode for Invention

The following description with reference to the accompanying drawings is provided to assist in a comprehensive understanding of various embodiments of the disclosure as defined by the claims. It includes various specific details to assist in that understanding but these are to be regarded as merely exemplary. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to
"a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

It is known to those skilled in the art that blocks of a flowchart (or sequence diagram) and a combination of flowcharts may be represented and executed by computer program instructions. These computer program instructions may be loaded on a processor of a general purpose computer, special purpose computer, or programmable data processing equipment. When the loaded program instructions are executed by the processor, they create a means for carrying out functions described in the flowchart. Because the computer program instructions may be stored in a computer readable memory that is usable in a specialized computer or a programmable data processing equipment, it is also possible to create articles of manufacture that carry out functions described in the flowchart. Because the computer program instructions may be loaded on a computer or a programmable data processing equipment, when executed as processes, they may carry out operations of functions described in the flowchart.

A block of a flowchart may correspond to a module, a segment, or a code containing one or more executable instructions implementing one or more logical functions, or may correspond to a part thereof. In some cases, functions described by blocks may be executed in an order different from the listed order. For example, two blocks listed in sequence may be executed at the same time or executed in reverse order.

In this description, the words "unit", "module" or the like may refer to a software component or hardware component, such as, for example, a field-programmable gate array (FPGA) or an application-specific integrated circuit (ASIC) capable of carrying out a function or an operation. However, a "unit", or the like, is not limited to hardware or software. A unit, or the like, may be configured so as to reside in an addressable storage medium or to drive one or more processors. Units, or the like, may refer to software components, object-oriented software components, class components, task components, processes, functions, attributes, procedures, subroutines, program code segments, drivers, firmware, microcode, circuits, data, databases, data structures, tables, arrays or variables. A function provided by a component and unit may be a combination of smaller components and units, and may be combined with others to compose larger components and units. Components and units may be configured to drive a device or one or more processors in a secure multimedia card.

Prior to the detailed description, terms or definitions necessary to understand the disclosure are described. However, these terms should be construed in a non-limiting way.

The "base station (BS)" is an entity communicating with a user equipment (UE) and may be referred to as BS, base transceiver station (BTS), node B (NB), evolved NB (eNB), access point (AP), 5G NB (5GNB), or gNB.

The "UE" is an entity communicating with a BS and may be referred to as UE, device, mobile station (MS), mobile equipment (ME), or terminal.

### CA/Multi-connectivity

The fifth generation wireless communication system, supports standalone mode of operation as well dual connectivity (DC). In DC a multiple Rx/Tx UE may be configured to utilise resources provided by two different nodes (or NBs) connected via non-ideal backhaul. One node acts as the Master Node (MN) and the other as the Secondary Node (SN). The MN and SN are connected via a network interface and at least the MN is connected to the core network. NR also supports Multi-RAT Dual Connectivity (MR-DC) operation whereby a UE in RRC_CONNECTED is configured to utilise radio resources provided by two distinct schedulers, located in two different nodes connected via a non-ideal backhaul and providing either E-UTRA (i.e. if the node is an ng-eNB) or NR access (i.e. if the node is a gNB). In NR for a UE in RRC_CONNECTED not configured with CA/DC there is only one serving cell comprising of the primary cell. For a UE in RRC_CONNECTED configured with CA/ DC the term 'serving cells' is used to denote the set of cells comprising of the Special Cell(s) and all secondary cells. In NR the term Master Cell Group (MCG) refers to a group of serving cells associated with the Master Node, comprising of the PCell and optionally one or more SCells. In NR the term Secondary Cell Group (SCG) refers to a group of serving cells associated with the Secondary Node, comprising of the PSCell and optionally one or more SCells. In NR PCell (primary cell) refers to a serving cell in MCG, operating on the primary frequency, in which the UE either performs the initial connection establishment procedure or initiates the connection re-establishment procedure. In NR for a UE configured with CA, Scell is a cell providing additional radio resources on top of Special Cell. Primary SCG Cell (PSCell) refers to a serving cell in SCG in which the UE performs random access when performing the Reconfiguration with Sync procedure. For Dual Connectivity operation the term SpCell (i.e. Special Cell) refers to the PCell of the MCG or the PSCell of the SCG, otherwise the term Special Cell refers to the PCell.

### Random access

In the 5G wireless communication system, random access (RA) is supported. Random access (RA) is used to achieve uplink (UL) time synchronization. RA is used during initial access, handover, radio resource control (RRC) connection re-establishment procedure, scheduling request transmission, secondary cell group (SCG) addition/modification, beam failure recovery and data or control information transmission in UL by non-synchronized UE in RRC CONNECTED state. Several types of random access procedure is supported such as contention based random access, contention free random access and each of these can be one 2 step or 4 step random access.

### BWP operation

In fifth generation wireless communication system bandwidth adaptation (BA) is supported. With BA, the receive and transmit bandwidth of a UE need not be as large as the bandwidth of the cell and can be adjusted: the width can be ordered to change (e.g. to shrink during period of low activity to save power); the location can move in the frequency domain (e.g. to increase scheduling flexibility); and the subcarrier spacing can be ordered to change (e.g. to allow different services). A subset of the total cell bandwidth of a cell is referred to as a Bandwidth Part (BWP). BA is achieved by configuring RRC connected UE with BWP(s) and telling the UE which of the configured BWPs is currently the active one. When BA is configured, the UE only has to monitor PDCCH on the one active BWP i.e. it does not have to monitor PDCCH on the entire DL frequency of the serving cell. In RRC connected state, UE is configured with one or more DL and UL BWPs, for each configured Serving Cell (i.e. PCell or SCell). For an activated Serving Cell, there is always one active UL and DL BWP at any point in time. The BWP switching for a Serving Cell is used to activate an inactive BWP and deactivate an active BWP at a time. The BWP switching is controlled by the PDCCH indicating a downlink assignment or an uplink grant, by the bwp-InactivityTimer, by RRC signaling, or by the medium access control (MAC) entity itself upon initiation of Random Access procedure. Upon addition of SpCell or activation of an SCell, the DL BWP and UL BWP indicated by firstActive-DownlinkBWP-Id and firstActiveUplinkBWP-Id respectively is active without receiving PDCCH indicating a downlink assignment or an uplink grant. The active BWP for a Serving Cell is indicated by either RRC or PDCCH. For unpaired spectrum, a DL BWP is paired with a UL BWP, and BWP switching is common for both UL and DL. Upon expiry of BWP inactivity timer UE switch to the active DL BWP to the default DL BWP or initial DL BWP (if default DL BWP is not configured).

### RRC states

In the fifth generation wireless communication system, RRC can be in one of the following states: RRC_IDLE, RRC_INACTIVE, and RRC_CONNECTED. A UE is either in RRC_CONNECTED state or in RRC_INACTIVE state when an RRC connection has been established. If this is not the case, i.e. no RRC connection is established, the UE is in RRC_IDLE state. The RRC states can further be characterized as follows:

In the RRC_IDLE, a UE specific discontinuous (DRX) may be configured by upper layers. The UE monitors Short Messages transmitted with paging RNTI (P-RNTI) over DCI; monitors a Paging channel for CN paging using 5G-S-temoprary mobile subscriber identity (5G-S-TMSI); performs neighboring cell measurements and cell (re-)selection; acquires system information and can send SI request (if configured); performs logging of available measurements together with location and time for logged measurement configured UEs.

In RRC_INACTIVE, a UE specific DRX may be configured by upper layers or by RRC layer; UE stores the UE Inactive AS context; a RAN-based notification area is configured by RRC layer. The UE monitors Short Messages transmitted with P-RNTI over DCI; monitors a Paging channel for CN paging using 5G-S-TMSI and RAN paging using fullI-RNTI; performs neighbouring cell measurements and cell (re-)selection; performs RAN-based notification area updates periodically and when moving outside the configured RAN-based notification area; acquires system information and can send SI request (if configured); performs logging of available measurements together with location and time for logged measurement configured UEs.

In the RRC_CONNECTED, the UE stores the AS context and transfer of unicast data to/from UE takes place. The UE monitors Short Messages transmitted with P-RNTI over DCI, if configured; monitors control channels associated with the shared data channel to determine if data is scheduled for it; provides channel quality and feedback information; performs neighbouring cell measurements and measurement reporting; acquires system information.

### PDCCH

In the fifth generation wireless communication system, Physical Downlink Control Channel (PDCCH) is used to schedule DL transmissions on PDSCH and UL transmissions on physical downlink shared channel (PUSCH), where the Downlink Control Information (DCI) on PDCCH includes: Downlink assignments containing at least modulation and coding format, resource allocation, and hybrid-ARQ information related to DL-SCH; Uplink scheduling grants containing at least modulation and coding format, resource allocation, and hybrid-ARQ information related to UL-SCH. In addition to scheduling, PDCCH can be used to for: Activation and deactivation of configured PUSCH transmission with configured grant; Activation and deactivation of PDSCH semi-persistent transmission; Notifying one or more UEs of the slot format; Notifying one or more UEs of the physical resource block (PRB)(s) and OFDM symbol(s) where the UE may assume no transmission is intended for the UE; Transmission of TPC commands for PUCCH and PUSCH; Transmission of one or more TPC commands for SRS transmissions by one or more UEs; Switching a UE's active bandwidth part; Initiating a random access procedure. A UE monitors a set of PDCCH candidates in the configured monitoring occasions in one or more configured COntrol REsource SETs (CORESETs) according to the corresponding search space configurations. A CORESET consists of a set of PRBs with a time duration of 1 to 3 OFDM symbols. The resource units Resource Element Groups (REGs) and Control Channel Elements (CCEs) are defined within a CORESET with each CCE consisting a set of REGs. Control channels are formed by aggregation of CCE. Different code rates for the control channels are realized by aggregating different number of CCE. Interleaved and non-interleaved CCE-to-REG mapping are supported in a CORESET. Polar coding is used for PDCCH. Each resource element group carrying PDCCH carries its own DMRS. QPSK modulation is used for PDCCH.

In fifth generation wireless communication system, a list of search space configurations is signaled by GNB for each configured BWP of serving cell wherein each search configuration is uniquely identified by a search space identifier. Search space identifier is unique amongst the BWPs of a serving cell. Identifier of search space configurtaion to be used for specific purpose such as paging reception, SI reception, random access response reception is explicitly signaled by gNB for each configured BWP. In NR search space configuration comprises of parameters Monitoring-periodicity-PDCCH-slot, Monitoring-offset-PDCCH-slot, Monitoring-symbols-PDCCH-within-slot and duration. A UE determines PDCCH monitoring occasion (s) within a slot using the parameters PDCCH monitoring periodicity (Monitoring-periodicity-PDCCH-slot), the PDCCH monitoring offset (Monitoring-offset-PDCCH-slot), and the PDCCH monitoring pattern (Monitoring-symbols-PDCCH-within-slot). PDCCH monitoring occasions are there in slots 'x' to x+duration where the slot with number 'x' in a radio frame with number 'y' satisfies the equation below: 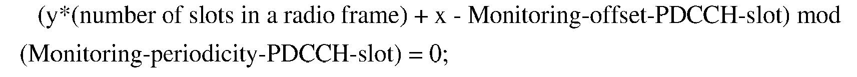
(y*(number of slots in a radio frame) + x - Monitoring-offset-PDCCH-slot) mod (Monitoring-periodicity-PDCCH-slot) = 0;

The starting symbol of a PDCCH monitoring occasion in each slot having PDCCH monitoring occasion is given by Monitoring-symbols-PDCCH-within-slot. The length (in symbols) of a PDCCH monitoring occasion is given in the corset associated with the search space. search space configuration includes the identifier of coreset configuration associated with it. A list of coreset configurations are signaled by GNB for each configured BWP of serving cell wherein each coreset configuration is uniquely identified by an coreset identifier. Coreset identifier is unique amongst the BWPs of a serving cell. Note that each radio frame is of 10ms duration. Radio frame is identified by a radio frame number or system frame number. Each radio frame comprises of several slots wherein the number of slots in a radio frame and duration of slots depends on sub carrier spacing. The number of slots in a radio frame and duration of slots depends radio frame for each supported SCS is pre-defined in NR. Each coreset configuration is associated with a list of TCI (Transmission configuration indicator) states. One DL RS ID (SSB or CSI RS) is configured per TCI state. The list of TCI states corresponding to a coreset configuration is signaled by gNB via RRC signaling. One of the TCI state in TCI state list is activated and indicated to UE by gNB. TCI state indicates the DL TX beam (DL TX beam is QCLed with SSB/CSI RS of TCI state) used by GNB for transmission of PDCCH in the PDCCH monitoring occasions of a search space.

### Downlink scheduling

In the downlink, the gNB can dynamically allocate resources to UEs via the C-RNTI on PDCCH(s). A UE always monitors the PDCCH(s) in order to find possible assignments when its downlink reception is enabled (activity governed by DRX when configured). When CA is configured, the same C-RNTI applies to all serving cells.

The gNB may pre-empt an ongoing PDSCH transmission to one UE with a latency-critical transmission to another UE. The gNB can configure UEs to monitor interrupted transmission indications using INT-RNTI on a PDCCH. If a UE receives the interrupted transmission indication, the UE may assume that no useful information to that UE was carried by the resource elements included in the indication, even if some of those resource elements were already scheduled to this UE.

In addition, with Semi-Persistent Scheduling (SPS), the gNB can allocate downlink resources for the initial HARQ transmissions to UEs: RRC defines the periodicity of the configured downlink assignments while PDCCH addressed to CS-RNTI can either signal and activate the configured downlink assignment, or deactivate it; i.e. a PDCCH addressed to CS-RNTI indicates that the downlink assignment can be implicitly reused according to the periodicity defined by RRC, until deactivated. When required, retransmissions are explicitly scheduled on PDCCH(s).

The dynamically allocated downlink reception overrides the configured downlink assignment in the same serving cell, if they overlap in time. Otherwise a downlink reception according to the configured downlink assignment is assumed, if activated. The UE may be configured with up to 8 active configured downlink assignments for a given BWP of a serving cell. When more than one is configured:
- The network decides which of these configured downlink assignments are active at a time (including all of them); and
- Each configured downlink assignment is activated separately using a DCI command and deactivation of configured downlink assignments is done using a DCI command, which can either deactivate a single configured downlink assignment or multiple configured downlink assignments jointly.

### Uplink scheduling

In the uplink, the gNB can dynamically allocate resources to UEs via the C-RNTI on PDCCH(s). A UE always monitors the PDCCH(s) in order to find possible grants for uplink transmission when its downlink reception is enabled (activity governed by DRX when configured). When CA is configured, the same C-RNTI applies to all serving cells.

The gNB may cancel a PUSCH transmission, or a repetition of a PUSCH transmission, or an SRS transmission of a UE for another UE with a latency-critical transmission. The gNB can configure UEs to monitor cancelled transmission indications using CI-RNTI on a PDCCH. If a UE receives the cancelled transmission indication, the UE shall cancel the PUSCH transmission from the earliest symbol overlapped with the resource or the SRS transmission overlapped with the resource indicated by cancellation. In addition, with Configured Grants, the gNB can allocate uplink resources for the initial HARQ transmissions and HARQ retransmissions to UEs. Two types of configured uplink grants are defined:
- With Type 1, RRC directly provides the configured uplink grant (including the periodicity).
- With Type 2, RRC defines the periodicity of the configured uplink grant while PDCCH addressed to CS-RNTI can either signal and activate the configured uplink grant, or deactivate it; i.e. a PDCCH addressed to CS-RNTI indicates that the uplink grant can be implicitly reused according to the periodicity defined by RRC, until deactivated.

If the UE is not configured with enhanced intra-UE overlapping resources prioritization, the dynamically allocated uplink transmission overrides the configured uplink grant in the same serving cell, if they overlap in time. Otherwise an uplink transmission according to the configured uplink grant is assumed, if activated.

If the UE is configured with enhanced intra-UE overlapping resources prioritization, in case a configured uplink grant transmission overlaps in time with dynamically allocated uplink transmission or with another configured uplink grant transmission in the same serving cell, the UE prioritizes the transmission based on the comparison between the highest priority of the logical channels that have data to be transmitted and which are multiplexed or can be multiplexed in MAC protocol data units (PDU) associated with the overlapping resources. Similarly, in case a configured uplink grant transmissions or a dynamically allocated uplink transmission overlaps in time with a scheduling request transmission, the UE prioritizes the transmission based on the comparison between the priority of the logical channel which triggered the scheduling request and the highest priority of the logical channels that have data to be transmitted and which are multiplexed or can be multiplexed in MAC PDU associated with the overlapping resource. In case the MAC PDU associated with a deprioritized transmission has already been generated, the UE keeps it stored to allow the gNB to schedule a retransmission. The UE may also be configured by the gNB to transmit the stored MAC PDU as a new transmission using a subsequent resource of the same configured uplink grant configuration when an explicit retransmission grant is not provided by the gNB.

Retransmissions other than repetitions are explicitly allocated via PDCCH(s) or via configuration of a retransmission timer.

The UE may be configured with up to 12 active configured uplink grants for a given BWP of a serving cell. When more than one is configured, the network decides which of these configured uplink grants are active at a time (including all of them). Each configured uplink grant can either be of Type 1 or Type 2. For Type 2, activation and deactivation of configured uplink grants are independent among the serving cells. When more than one Type 2 configured grant is configured, each configured grant is activated separately using a DCI command and deactivation of Type 2 configured grants is done using a DCI command, which can either deactivate a single configured grant configuration or multiple configured grant configurations jointly.

When SUL is configured, the network should ensure that an active configured uplink grant on SUL does not overlap in time with another active configured uplink grant on the other UL configuration.

For both dynamic grant and configured grant, for a transport block, two or more repetitions can be in one slot, or across slot boundary in consecutive available slots with each repetition in one slot. For both dynamic grant and configured grant Type 2, the number of repetitions can be also dynamically indicated in the L1 signalling. The dynamically indicated number of repetitions shall override the RRC configured number of repetitions, if both are present.

### Logical channel prioritization (LCP)

In NR, the UE has an uplink rate control function which manages the sharing of uplink resources between logical channels. RRC controls the uplink rate control function by giving each logical channel a priority, a prioritized bit rate (PBR), and a buffer size duration (BSD). In addition, mapping restrictions can be configured. With LCP restrictions in MAC, RRC can restrict the mapping of a logical channel to a subset of the configured cells, numerologies, PUSCH transmission durations, configured grant configurations and control whether a logical channel can utilize the resources allocated by a Type 1 Configured Grant or whether a logical channel can utilize dynamic grants indicating a certain physical priority level. With such restrictions, it then becomes possible to reserve, for instance, the numerology with the largest subcarrier spacing and/or shortest PUSCH transmission duration for URLLC services. Furthermore, RRC can associate logical channels with different scheduling request (SR) configurations, for instance, to provide more frequent SR opportunities to URLLC services. The uplink rate control function ensures that the UE serves the logical channel(s) in the following sequence:
1. All relevant logical channels in decreasing priority order up to their PBR;
2. All relevant logical channels in decreasing priority order for the remaining resources assigned by the grant.

In case the PBRs are all set to zero, the first step is skipped and the logical channels are served in strict priority order: the UE maximizes the transmission of higher priority data.

The mapping restrictions tell the UE which logical channels are relevant for the grant received. If no mapping restrictions are configured, all logical channels are considered.

If more than one logical channel has the same priority, the UE shall serve them equally.

### Buffer Status Reporting

In NR, the Buffer Status reporting (BSR) procedure is used to provide the serving gNB with information about UL data volume in the MAC entity. RRC configures the following parameters to control the BSR:
- periodicBSR-Timer;
- retxBSR-Timer;
- logicalChannelSR-DelayTimerApplied;
- logicalChannelSR-DelayTimer;
- logicalChannelSR-Mask;
- logicalChannelGroup.

Each logical channel may be allocated to an LCG using the logicalChannelGroup. The maximum number of LCGs is eight. A BSR shall be triggered if any of the following events occur:
- UL data, for a logical channel which belongs to a logical channel group (LCG), becomes available to the MAC entity; and either
- this UL data belongs to a logical channel with higher priority than the priority of any logical channel containing available UL data which belong to any LCG; or
- none of the logical channels which belong to an LCG contains any available UL data.
   in which case the BSR is referred below to as 'Regular BSR';
- UL resources are allocated and number of padding bits is equal to or larger than the size of the Buffer Status Report MAC CE plus its subheader, in which case the BSR is referred below to as 'Padding BSR';
- retxBSR-Timer expires, and at least one of the logical channels which belong to an LCG contains UL data, in which case the BSR is referred below to as 'Regular BSR';
- periodicBSR-Timer expires, in which case the BSR is referred below to as 'Periodic BSR'.

For Regular BSR, the MAC entity shall:
1> if the BSR is triggered for a logical channel for which logicalChannelSR-DelayTimerApplied with value true is configured by upper layers:
   2> start or restart the logicalChannelSR-DelayTimer.
1> else:
   2> if running, stop the logicalChannelSR-DelayTimer.

For Regular and Periodic BSR, the MAC entity shall:
1> if more than one LCG has data available for transmission when the MAC PDU containing the BSR is to be built:
   2> report Long BSR for all LCGs which have data available for transmission.
1> else:
   2> report Short BSR.

For Padding BSR, the MAC entity shall:
1> if the number of padding bits is equal to or larger than the size of the Short BSR plus its subheader but smaller than the size of the Long BSR plus its subheader:
   2> if more than one LCG has data available for transmission when the BSR is to be built:
      3> if the number of padding bits is equal to the size of the Short BSR plus its subheader:
         4> report Short Truncated BSR of the LCG with the highest priority logical channel with data available for transmission.
      3> else:
         4> report Long Truncated BSR of the LCG(s) with the logical channels having data available for transmission following a decreasing order of the highest priority logical channel (with or without data available for transmission) in each of these LCG(s), and in case of equal priority, in increasing order of LCGID.
   2> else:
      3> report Short BSR.
1> else if the number of padding bits is equal to or larger than the size of the Long BSR plus its subheader:
   2> report Long BSR for all LCGs which have data available for transmission.

For BSR triggered by retxBSR-Timer expiry, the MAC entity considers that the logical channel that triggered the BSR is the highest priority logical channel that has data available for transmission at the time the BSR is triggered.

The MAC entity shall:
1> if the Buffer Status reporting procedure determines that at least one BSR has been triggered and not cancelled:
   2> if UL-SCH resources are available for a new transmission and the UL-SCH resources can accommodate the BSR MAC CE plus its subheader as a result of logical channel prioritization:
      3> instruct the Multiplexing and Assembly procedure to generate the BSR MAC CE(s);
      3> start or restart periodicBSR-Timer except when all the generated BSRs are long or short Truncated BSRs;
      3> start or restart retxBSR-Timer.
   2> if a Regular BSR has been triggered and logicalChannelSR-DelayTimer is not running:
      3> if there is no UL-SCH resource available for a new transmission; or
      3> if the MAC entity is configured with configured uplink grant(s) and the Regular BSR was triggered for a logical channel for which logicalChannelSR-Mask is set to false; or
      3> if the UL-SCH resources available for a new transmission do not meet the LCP mapping restrictions configured for the logical channel that triggered the BSR:
         4> trigger a Scheduling Request.

A MAC PDU shall contain at most one BSR MAC CE, even when multiple events have triggered a BSR. The Regular BSR and the Periodic BSR shall have precedence over the padding BSR.

The MAC entity shall restart retxBSR-Timer upon reception of a grant for transmission of new data on any UL-SCH.

All triggered BSRs may be cancelled when the UL grant(s) can accommodate all pending data available for transmission but is not sufficient to additionally accommodate the BSR MAC CE plus its subheader. All BSRs triggered prior to MAC PDU assembly shall be cancelled when a MAC PDU is transmitted and this PDU includes a Long or Short BSR MAC CE which contains buffer status up to (and including) the last event that triggered a BSR prior to the MAC PDU assembly.

eXtended Reality(XR) is a term for different types of realities and refers to all real- and-virtual combined environments and human-machine interactions generated by computer technology and wearables. It includes following representative forms and the areas interpolated among them: Augmented Reality (AR); Mixed Reality (MR); Virtual Reality (VR).

In case of XR, it is important to transmit the packet within packet delay budget (PDB). The Packet Delay Budget (PDB) defines an upper bound for the time that a packet may be delayed between the UE and the N6 termination point at the UPF. Typical PDB is 10ms for VR/CG UL stream. PDB is 10 ms or 30ms for AR UL stream depending on type of stream. Logical channel (LCH) with lower PDB can have higher priority compared to LCH with higher PDB. However, if the LCH with higher PDB does not get scheduled, packet needs to be discarded after the PDB. In case of applications/services such as XR, application layer frame or data unit (also referred as PDU set) can consist of multiple IP packets. PDU set is one or more PDUs carrying the payload of one unit of information generated at the application level. In case of XR, it is important to transmit packet/PDU of application layer frame or data unit (or PDU set) within PDB.

Let's say data arrives for high priority LCH in buffer. BSR is triggered. While the UE receives UL grant and send this data, low priority data arrives in buffer. This will not trigger BSR. Since the remaining time is still enough, it is also not scheduled earlier than the high priority data even if we change the LCP procedure. UL grant arrives and high priority data is transmitted. Low priority data remains in buffer. Currently BSR does not get triggered for data which is already there in buffer.

So enhanced method of logical channel prioritization/uplink transmission/Buffer status reporting is needed.

In an embodiment according to this method of disclosure, it is proposed to introduce a new Regular BSR trigger as follows: (method 1)

A BSR shall be triggered if UL data, for a logical channel which belongs to an LCG, becomes available to the MAC entity (i.e. UL data for a logical channel which belongs to an LCG arrives in the buffer) and enhancedBSRTrigger is configured (for logical channel of this UL data) and the remaining delivery time of the UL data is less than a threshold.

Alternatively, a BSR shall be triggered if UL data, for a logical channel which belongs to an LCG, becomes available to the MAC entity (i.e. UL data for a logical channel which belongs to an LCG arrives in the buffer) and the remaining delivery time of the UL data is less than a threshold.

Alternatively, a BSR shall be triggered if UL data, for a logical channel which belongs to an LCG, becomes available to the MAC entity (i.e. UL data for a logical channel which belongs to an LCG arrives in the buffer) and enhancedBSRTrigger is configured (for logical channel of this UL data and the logical channel has lower priority than the priority of any logical channel containing available UL data which belong to any LCG) and the remaining delivery time of the UL data is less than a threshold.

Alternatively, a BSR shall be triggered if UL data, for a logical channel which belongs to an LCG, becomes available to the MAC entity (i.e. UL data for a logical channel which belongs to an LCG arrives in the buffer) and the remaining delivery time of the UL data is less than a threshold and the logical channel has lower priority than the priority of any logical channel containing available UL data which belong to any LCG.

According to another embodiment of the present disclosure, enhancedBSRTrigger (can also be known by other name e.g. enhancedScheduling, enhancedSchedulingEnabled, enahncedSchedulingforXR, etc.) can be signaled per LCH basis or per LCG basis in the RRC Reconfiguration message received from gNB. Alternately, enhancedBSRTrigger can be signaled per resource block (RB) basis in the RRC Reconfiguration message received from gNB; in this case enhancedBSRTrigger is considered to be configured for LCHs mapped to the RB for which enhancedBSRTrigger is signaled in the RRC Reconfiguration message. Alternately, enhancedBSRTrigger is commonly signaled in the RRC Reconfiguration message and is applied for all LCHs/ RBs. Alternately, enhancedBSRTrigger is commonly signaled per CG in the RRC Reconfiguration message and is applied for all LCHs/RBs of CG.

According to another embodiment of the present disclosure, threshold can be signaled per LCH basis or per LCG basis in the RRC Reconfiguration message received from gNB. Alternately, threshold can be signaled per RB basis in the RRC Reconfiguration message received from gNB; in this case threshold is considered to be configured for LCHs mapped to the RB for which threshold is signaled in the RRC Reconfiguration message. Alternately, threshold is commonly signaled in the RRC Reconfiguration message and is applied for all LCHs/RBs. Alternately, threshold is commonly signaled per CG in the RRC Reconfiguration message and is applied for all LCHs/RBs of CG.

According to another embodiment of the present disclosure, in the above operation, remaining delivery time of UL data corresponding to a logical channel is the smallest remaining delivery time amongst all the UL data of that logical channel. In case where LCHs with PDB and LCHs without PDB exist together, then, we can regard the remaining delivery time of the LCHs without PDB as infinity. Remaining delivery time for a packet/data is basically 'PDB (or PDU set delay budget i.e. PSDB) - time elapsed since the data/packet arrived in buffer (e.g. packet data convergence protocol (PDCP) buffer or L2 buffer). Note that discard timer is started when data/packet arrive in PDCP buffer. The value of discard timer is equal to PDB or PSDB and discard timer expires after this time. For example, if discard timer starts at time T and value of discard timer is 100ms, discard timer will expire at T+100ms. So remaining delivery time for a packet/data is basically the time elapsed since the discard timer for packet/ data is started. UE may calculate the remaining delivery time at the time the BSR MAC CE is generated or UE may calculate the remaining delivery time with respect to time the BSR MAC CE will be transmitted in the UL grant. Alternately, remaining delivery time for a packet/data is basically 'PDB (or PDU set delay budget i.e. PSDB) - time elapsed since the data/packet arrived in NAS buffer. Alternately, remaining delivery time for a packet/data is basically 'PDB (or PDU set delay budget i.e. PSDB) - time elapsed since the data/packet is generated by application layer.

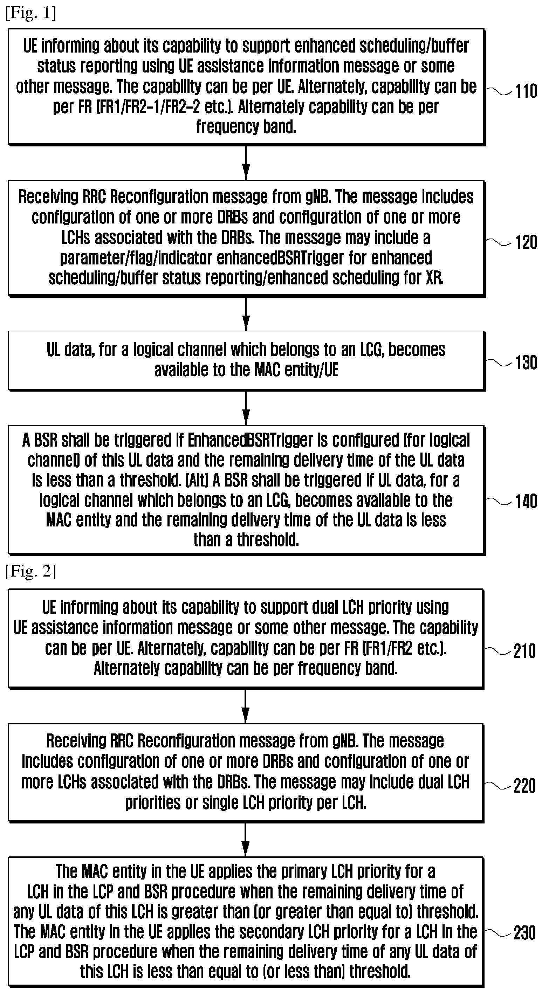

FIG. 1 illustrates a flowchart of a method illustrates a flowchart associated with triggering buffer state reporting.

In an embodiment according to this method of disclosure, a procedure can be explained through an example FIG.1.

Referring to Fig. 1, in step 110, A UE may transmit (inform) about its capability to support enhanced scheduling/buffer status reporting using UE assistance information message or some other message to a gNB. The capability can be per UE which means that the capability is not specific to any feature or frequency band or frequency range supported by UE Alternately, capability can be per Frequency range (FR) (FR1/FR2-1, FR2-2 etc.). FR1 includes frequency bands from 410 MHz to 7125 MHz. FR2-1 includes frequency bands from 24.25 GHz to 52.6 GHz. FR2-2 includes frequency bands from 52.6 GHz to 71 GHz. For example, UE may support enhanced scheduling/ buffer status reporting for FR1 but it may not support it for FR2 or vice versa. Alternately capability can be per frequency band. UE may support one or more frequency bands but it may support enhanced scheduling/buffer status reporting for selective frequency bands or all of them or none of them.

In step 120, the UE receives RRC Reconfiguration message from the gNB. The message includes configuration of one or more data radio bearers (DRBs) and configuration of one or more LCHs associated with the DRBs. The message may include mapping between logical channel and a subset of the configured cells, numerologies, PUSCH transmission durations, configured grant configurations and control whether a logical channel can utilize the resources allocated by a Type 1 Configured Grant or whether a logical channel can utilize dynamic grants indicating a certain physical priority level. The message may include a parameter/flag/indicator enhancedBSRTrigger for enhanced scheduling/buffer status reporting/enhanced scheduling for XR (as explained earlier).

In step 130, UL data, for a logical channel which belongs to an LCG, becomes available to the MAC entity (i.e. UL data for a logical channel which belongs to an LCG arrives in the buffer) .

In step 140, a BSR shall be triggered when the UL data arrives in the buffer(s) for transmission, if any of the following events occur (note that UE checks for these events when the UL data arrives in the buffer(s) for transmission):
For example, EnhancedBSRTrigger is configured (for logical channel of this UL data) and the remaining delivery time of the UL data is less than a threshold. Alternatively, the remaining delivery time of the UL data of the logical channel is less than a threshold; Alternatively, EnhancedBSRTrigger is configured (for logical channel of this UL data and the logical channel has lower priority than the priority of any logical channel containing available UL data which belong to any LCG) and the remaining delivery time of the UL data is less than a threshold; Alternatively, the remaining delivery time of the UL data of the logical channel is less than a threshold and the logical channel has lower priority than the priority of any logical channel containing available UL data which belong to any LCG;
   or
this UL data belongs to a logical channel with higher priority than the priority of any logical channel containing available UL data which belong to any LCG;
   or
none of the logical channels which belong to an LCG contains any available UL data.

In another embodiment according to this disclosure, it is proposed to introduce a new Regular BSR trigger as follows: (method 2)

A BSR shall be triggered if any of the following events occur (note that UE events a) are applicable only at the time when the UL data arrives in the buffer(s) for transmission. Events b) are not restricted to the time when the UL data arrives in the buffer(s) for transmission and can be met at any time while UL data is there in the buffer(s)):
a) UL data, for a logical channel which belongs to an LCG, becomes available to the MAC entity (i.e. UL data, for a logical channel which belongs to an LCG arrives in buffer); and either
   this UL data belongs to a logical channel with higher priority than the priority of any logical channel containing available UL data which belong to any LCG;
      or
   none of the logical channels which belong to an LCG contains any available UL data;
b) UL data is available for a logical channel (i.e. UL data is there in buffer of logical channel) and enhancedBSRTrigger is configured (for logical channel of this UL data) and the remaining delivery time of any UL data of this LCH is less than a threshold. Alternatively, UL data is available for a logical channel (i.e. UL data is there in buffer of logical channel) and the remaining delivery time of any UL data of this LCH is less than a threshold. Alternatively, UL data is available for a logical channel (i.e. UL data is there in buffer of logical channel) and enhancedBSRTrigger is configured (for logical channel of this UL data) and the remaining delivery time of any UL data of this LCH is less than a threshold and the logical channel has lower priority than the priority of any logical channel containing available UL data which belong to any LCG.

According to another embodiment of the present disclosure, enhancedBSRTrigger (can also be known by other name e.g. enhancedScheduling, enhancedSchedulin- gEnabled, enahncedSchedulingforXR, etc.) can be signaled per LCH basis or per LCG basis in the RRC Reconfiguration message received from gNB. Alternately, enhancedBSRTrigger can be signaled per RB basis in the RRC Reconfiguration message received from gNB; in this case enhancedBSRTrigger is considered to be configured for LCHs mapped to the RB for which enhancedBSRTrigger is signaled in the RRC Reconfiguration message. Alternately, enhancedBSRTrigger is commonly signaled in the RRC Reconfiguration message and is applied for all LCHs/RBs. Alternately, enhancedBSRTrigger is commonly signaled per CG in the RRC Reconfiguration message and is applied for all LCHs/RBs of CG.

According to another embodiment of the present disclosure, threshold can be signaled per LCH basis or per LCG basis in the RRC Reconfiguration message received from gNB. Alternately, threshold can be signaled per RB basis in the RRC Reconfiguration message received from gNB; in this case threshold is considered to be configured for LCHs mapped to the RB for which threshold is signaled in the RRC Reconfiguration message. Alternately, threshold is commonly signaled in the RRC Reconfiguration message and is applied for all LCHs/RBs. Alternately, threshold is commonly signaled per CG in the RRC Reconfiguration message and is applied for all LCHs/RBs of CG.

According to another embodiment of the present disclosure, in the above operation, remaining delivery time of UL data corresponding to a logical channel is the smallest remaining delivery time amongst all the UL data of that logical channel. In case where LCHs with PDB and LCHs without PDB exist together, then, we can regard the remaining delivery time of the LCHs without PDB as infinity. Remaining delivery time for a packet/data is basically 'PDB (or PSDB) - time elapsed since the data/packet arrived in buffer (e.g. PDCP buffer or L2 buffer). Note that a discard timer is started when data/packet arrive in PDCP buffer. The value of discard timer is equal to PDB or PSDB and discard timer expires after this time. For example, if discard timer starts at time T and value of discard timer is 100ms, discard timer will expire at T+100ms. So remaining delivery time for a packet/data is basically the time elapsed since the discard timer for packet/data is started. UE may calculate the remaining delivery time at the time the BSR MAC CE is generated or UE may calculate the remaining delivery time with respect to time the BSR MAC CE will be transmitted in the UL grant. Alternately, remaining delivery time for a packet/data is basically 'PDB (or PSDB) - time elapsed since the data/packet arrived in NAS buffer. Alternately, remaining delivery time for a packet/data is basically 'PDB (or PSDB) - time elapsed since the data/packet is generated by application layer.

In an embodiment according to this method of disclosure, the operation is as follows:
In step 1, UE may inform about its capability to support enhanced scheduling/buffer status reporting using UE assistance information message or some other message. The capability can be per UE. Alternately, capability can be per FR (FR1/FR2 etc.). Alternately capability can be per frequency band.

In step 2, UE receives RRC Reconfiguration message from gNB. The message includes configuration of one or more DRBs and configuration of one or more LCHs associated with the DRBs. The message may include mapping between logical channel and a subset of the configured cells, numerologies, PUSCH transmission durations, configured grant configurations and control whether a logical channel can utilise the resources allocated by a Type 1 Configured Grant or whether a logical channel can utilise dynamic grants indicating a certain physical priority level. The message may include a parameter/flag/indicator enhancedBSRTrigger for enhanced scheduling/ buffer status reporting/enhanced scheduling for XR (as explained earlier).

In step 3, a BSR shall be triggered if any of the following events occur:
a) UL data, for a logical channel which belongs to an LCG, becomes available to the MAC entity (i.e. UL data, for a logical channel which belongs to an LCG arrives in buffer); and either
   this UL data belongs to a logical channel with higher priority than the priority of any logical channel containing available UL data which belong to any LCG;
      or
   none of the logical channels which belong to an LCG contains any available UL data;
b) UL data is available for a logical channel (i.e. UL data is there in buffer of logical channel) and enhancedBSRTrigger is configured (for logical channel) of this UL data and the remaining delivery time of any UL data of this LCH is less than a threshold.

Alternatively, UL data is available for a logical channel (i.e. UL data is there in buffer of logical channel) and the remaining delivery time of any UL data of this LCH is less than a threshold.

In an embodiment according to this method of disclosure, it is proposed to configure dual priority for a LCH, (method 3)
- primary LCH priority and
- secondary LCH priority

The LCH priority value(s) for LCH can be signaled in RRC Reconfiguration message by gNB. Note that in current state of art, LCH is configured with one LCH priority. UE may inform about its capability to support dual LCH priority using UE assistance information message or some other message. The capability can be per UE. Alternately, capability can be per FR (FR1/FR2-1, FR2-2 etc.). FR1 includes frequency bands from 410 MHz to 7125 MHz. FR2-1 includes frequency bands from 24.25 GHz to 52.6 GHz. FR2-2 includes frequency bands from 52.6 GHz to 71 GHz. For example, UE may support dual LCH priority for FR1 but it may not support it for FR2 or vice versa. Alternately capability can be per frequency band. UE may support one or more frequency bands but it may support dual LCH priority for selective frequency bands or all of them or none of them.

LCH priority is changed from primary to secondary when the remaining delivery time of any UL data of this LCH is less than a threshold. The changed priority is used in LCP and BSR trigger and other procedure in MAC which uses LCH priority.
a) For LCH configured with dual priority,
   - secondary LCH priority is applied to LCH when the remaining delivery time of any UL data of this LCH is less than a threshold.
   - primary LCH priority is applied to LCH when the remaining delivery time of none of the UL data of this LCH is less than a threshold.
b) For LCH not configured with dual priority,
   - configured LCH priority is applied to LCH.

The MAC entity in the UE applies the primary LCH priority for a LCH in the LCP and BSR/SR procedure when the remaining delivery time of any UL data of this LCH is greater than (or greater than equal to) threshold. The MAC entity in the UE applies the secondary LCH priority for a LCH in the LCP and BSR/SR procedure when the remaining delivery time of any UL data of this LCH is less than equal to (or less than) threshold. LCP/BSR/SR procedure are explained earlier in this disclosure.

According to another embodiment of the present disclosure, in the above operation, remaining delivery time of UL data corresponding to a logical channel is the smallest remaining delivery time amongst all the UL data of that logical channel. In case where LCHs with PDB and LCHs without PDB exist together, then, we can regard the remaining delivery time of the LCHs without PDB as infinity. Remaining delivery time for a packet/data is basically 'PDB (or PSDB) - time elapsed since the data/packet arrived in buffer (e.g. PDCP buffer or L2 buffer). Note that discard timer is started when data/packet arrive in PDCP buffer. The value of discard timer is equal to PDB or PSDB and discard timer expires after this time. For example, if discard timer starts at time T and value of discard timer is 100ms, discard timer will expire at T+100ms. So remaining delivery time for a packet/data is basically the time elapsed since the discard timer for packet/data is started. UE may calculate the remaining delivery time at the time the BSR MAC CE is generated or UE may calculate the remaining delivery time with respect to time the BSR MAC CE will be transmitted in the UL grant. Alternately, remaining delivery time for a packet/data is basically 'PDB (or PSDB) - time elapsed since the data/packet arrived in NAS buffer. Alternately, remaining delivery time for a packet/data is basically 'PDB (or PSDB) - time elapsed since the data/packet is generated by application layer.

In an embodiment according to this method of disclosure, it can be explained through an example FIG.2. It can be example of method 3.

FIG. 2 illustrates a flowchart of a method associated with dual priority for a logical channel.

In step 210, UE may inform about its capability to support dual LCH priority using UE assistance information message or some other message. The capability can be per UE. Alternately, capability can be per FR (FR1/FR2-1, FR2-2 etc.). FR1 includes frequency bands from 410 MHz to 7125 MHz. FR2-1 includes frequency bands from 24.25 GHz to 52.6 GHz. FR2-2 includes frequency bands from 52.6 GHz to 71 GHz. For example, UE may support dual LCH priority for FR1 but it may not support it for FR2 or vice versa. Alternately capability can be per frequency band. UE may support one or more frequency bands but it may support dual LCH priority for selective frequency bands or all of them or none of them.

In step 220, UE receives RRC Reconfiguration message from gNB. The message includes configuration of one or more DRBs and configuration of one or more LCHs associated with the DRBs. The message may include mapping between logical channel and a subset of the configured cells, numerologies, PUSCH transmission durations, configured grant configurations and control whether a logical channel can utilize the resources allocated by a Type 1 Configured Grant or whether a logical channel can utilize dynamic grants indicating a certain physical priority level. The message may include dual LCH priorities or single LCH priority per LCH.
a) For LCH configured with dual priority,
   - secondary LCH priority is applied to LCH when the remaining delivery time of any UL data of this LCH is less than a threshold.
   - primary LCH priority is applied to LCH when the remaining delivery time of none of the UL data of this LCH is less than a threshold
b) For LCH not configured with dual priority,
   - configured LCH priority is applied to LCH

In step 230, the MAC entity in the UE applies the primary LCH priority for a LCH in the LCP and BSR/SR procedure when the remaining delivery time of any UL data of this LCH is greater than (or greater than equal to) threshold. The MAC entity in the UE applies the secondary LCH priority for a LCH in the LCP and BSR/SR procedure when the remaining delivery time of any UL data of this LCH is less than equal to (or less than) threshold.

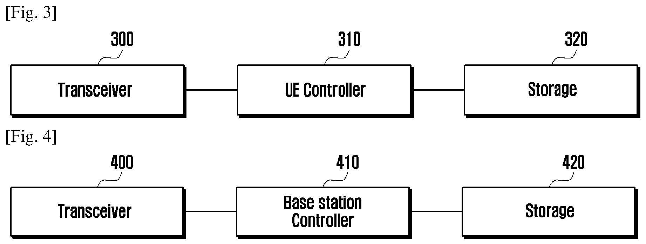

FIG. 3 illustrates a UE according to an embodiment.

Referring to FIG. 3, the UE includes a transceiver 300, a UE controller 310, and a storage 320. The UE controller 310 may be defined as a circuit, an ASIC, or at least one processor.

The transceiver 300 may transmit and receive signals to and from another network entity or UE. The transceiver 300 may receive system information from, e.g., a base station and/or another UE, and may receive an SS or a reference signal (RS).

The UE controller 310 may control an overall operation of the UE according to any of the embodiments in the disclosure. For example, the UE controller 310 may control signal flow between blocks to perform operations according to the above-described drawings and flowcharts.

Specifically, the UE controller 310 operates according to a control signal from the base station or the UE, and may exchange messages or signals with another UE and/or base station.

The storage 320 may store at least one of information transmitted and received through the transceiver 300 and information generated through the UE controller 310.

FIG. 4 illustrates a base station according to an embodiment.

Referring to FIG. 4, the base station includes a transceiver 400, a base station controller 410, and a storage 420. The base station controller may be defined as a circuit, an ASIC, or at least one processor.

The transceiver 400 may transmit and receive signals to and from another network entity or UE. For example, the transceiver may transmit system information to a UE and may transmit an SS or an RS.

The base station controller 410 may control an overall operation of the base station according to an embodiment of the disclosure. For example, the base station controller 1410 may control operations proposed by the disclosure to manage and reduce interference with neighboring base stations. Specifically, the base station controller 410 may transmit a control signal to a UE to control the operation of the UE or exchange messages or signals with the UE.

The storage 420 may store at least one of information transmitted and received through the transceiver 400 and information generated through the base station controller 1410.

It should be understood that while the flowcharts of the embodiments of the present application indicate the individual operational steps by arrows, the order of these implementation steps is not limited to the order indicated by the arrows. Unless explicitly stated herein, in some implementation scenarios of the embodiments of the present application, the implementation steps in the respective flowcharts may be performed in other orders as desired. In addition, some or all of the steps in each flowchart may include multiple sub-steps or multiple stages based on actual implementation scenarios. Some or all of these sub-steps or stages may be executed at the same moment, and each of these sub-steps or stages may also be executed separately at different moments. In the scenarios where the execution moments are different, the order of execution of these sub-steps or stages may be flexibly configured according to the needs, and the embodiments of the present application are not limited thereto.

The above description is only an optional implementation of part of the implementation scenarios of the present application. It should be noted that for those ordinary skill in the art, other similar means of implementation based on the technical idea of the present application, without departing from the technical idea of the present application, also fall within the scope of protection of the embodiments of the present application.

Other embodiments of the present disclosure will readily be conceived by those skill in the art after considering the specification and practicing the invention disclosed herein. The present application is intended to cover any variation, use, or adaptation of the present disclosure that follows the general principle of the present disclosure and includes commonly known or customary technical means in the art not disclosed herein. The specification and embodiments are to be considered exemplary only, and the scope of the disclosure is limited by the claims.

## Claims

1. A method performed by a terminal in a wireless communication system, the method comprising:
transmitting (210), to a base station, a message comprising information on a capability to support a dual logical channel, LCH, priority representing an LCH priority capable of being adjusted from a primary priority to a secondary priority;
receiving (220), from the base station, a radio resource control, RRC, reconfiguration message comprising information on the dual LCH priority for at least one LCH;
based on the information on the dual LCH priority for the at least one LCH, identifying an LCH configured with the dual LCH priority; and
in case that remaining delivery time of any uplink, UL, data of the LCH is less than a threshold, applying (230) the secondary priority for the LCH in a logical channel prioritization, LCP, procedure.

2. The method of claim 1, further comprising:
in case that the remaining delivery time of none of UL data of the LCH is less than the threshold, applying the primary priority for the LCH in the LCP procedure.

3. The method of claim 1, wherein the remaining delivery time is a remaining time of a discard timer associated with a packet data convergence protocol, PDCP, and the discard timer being started on reception of data from an upper layer.

4. The method of claim 1,
wherein the capability comprises a per terminal basis capability, and
wherein the RRC reconfiguration message further comprises information on the threshold associated with the remaining delivery time.

5. A method performed by a base station in a wireless communication system, the method comprising:
receiving (210), from a terminal, a message comprising information on a capability to support a dual logical channel, LCH, priority representing an LCH priority capable of being adjusted from a primary priority to a secondary priority;
identifying at least one LCH configured with the dual LCH priority; and
transmitting (220), to the terminal, a radio resource control, RRC, reconfiguration message comprising information on the dual LCH priority for the at least one LCH,
wherein, in case that remaining delivery time of any uplink, UL, data of an LCH is less than a threshold, the secondary priority is applied (230) for the LCH in a logical channel prioritization, LCP, procedure.

6. The method of claim 5,
wherein, in case that the remaining delivery time of none of UL data of the LCH is less than the threshold, the primary priority is applied for the LCH in the LCP procedure.

7. The method of claim 5,
wherein the remaining delivery time is a remaining time of a discard timer associated with a packet data convergence protocol, PDCP, and the discard timer being started on reception of data from an upper layer,
wherein the capability comprises a per terminal basis capability, and
wherein the RRC reconfiguration message further comprises information on the threshold associated with the remaining delivery time.

8. A terminal in a wireless communication system, the terminal comprising:
a transceiver (300); and
at least one processor (310) coupled with the transceiver (300) and configured to:
transmit, to a base station, a message comprising information on a capability to support a dual logical channel, LCH, priority representing an LCH priority capable of being adjusted from a primary priority to a secondary priority,
receive, from the base station, a radio resource control, RRC, reconfiguration message comprising information on the dual LCH priority for at least one LCH,
based on the information on the dual LCH priority for the at least one LCH, identify an LCH configured with the dual LCH priority, and
in case that remaining delivery time of any uplink, UL, data of the LCH is less than a threshold, apply the secondary priority for the LCH in a logical channel prioritization, LCP, procedure.

9. The terminal of claim 8, wherein the at least one processor is further configured to:
in case that the remaining delivery time of none of UL data of the LCH is less than the threshold, apply the primary priority for the LCH in the LCP procedure.

10. The terminal of claim 8, wherein the remaining delivery time is a remaining time of a discard timer associated with a packet data convergence protocol, PDCP, and the discard timer being started on reception of data from an upper layer.

11. The terminal of claim 8,
wherein the capability comprises a per terminal basis capability, and
wherein the RRC reconfiguration message further comprises information on the threshold associated with the remaining delivery time.

12. A base station in a wireless communication system, the base station comprising:
a transceiver (400); and
at least one processor (410) coupled with the transceiver (400) and configured to:
receive, from a terminal, a message comprising information on a capability to support a dual logical channel, LCH, priority representing an LCH priority capable of being adjusted from a primary priority to a secondary priority,
identify at least one LCH configured with the dual LCH priority, and
transmit, to the terminal, a radio resource control, RRC, reconfiguration message comprising information on the dual LCH priority for the at least one LCH,
wherein, in case that remaining delivery time of any uplink, UL, data of an LCH is less than a threshold, the secondary priority is applied for the LCH in a logical channel prioritization, LCP, procedure.

13. The base station of claim 12, wherein, in case that the remaining delivery time of none of UL data of the LCH is less than the threshold, the primary priority is applied for the LCH in the LCP procedure.

14. The base station of claim 12, wherein the remaining delivery time is a remaining time of a discard timer associated with a packet data convergence protocol, PDCP, and the discard timer being started on reception of data from an upper layer.

15. The base station of claim 12,wherein the capability comprises a per terminal basis capability, and
wherein the RRC reconfiguration message further comprises information on the threshold associated with the remaining delivery time.

## Patentansprüche

1. Verfahren, durchgeführt durch ein Endgerät in einem drahtlos Kommunikationssystem, wobei das Verfahren Folgendes umfasst:
Übertragen (210), an eine Basisstation, einer Nachricht, die Informationen über eine Fähigkeit umfasst, eine duale Priorität eines logischen Kanals, LCH-Priorität, zu unterstützen, die eine LCH-Priorität darstellt, die dazu in der Lage ist, von einer primären Priorität auf eine sekundäre Priorität angepasst zu werden;
Empfangen (220), von der Basisstation, einer Funkressourcensteuerungs-Rekonfigurationsnachricht, RRC-Rekonfigurationsnachricht, die Informationen über die duale LCH-Priorität für mindestens einen LCH umfasst;
basierend auf den Informationen über die duale LCH-Priorität für den mindestens einen LCH, Identifizieren eines LCH, der mit der dualen LCH-Priorität konfiguriert ist; und
falls die verbleibende Lieferzeit beliebiger Uplink-Daten, UL-Daten, des LCH kleiner als ein Schwellenwert ist, Anwenden (230) der sekundären Priorität für den LCH in einer logischen Kanalpriorisierungsprozedur, LCP-Prozedur.

2. Verfahren nach Anspruch 1, ferner umfassend:
falls die verbleibende Lieferzeit von keinen der UL-Daten des LCH kleiner als der Schwellenwert ist, Anwenden der primären Priorität für den LCH in der LCP-Prozedur.

3. Verfahren nach Anspruch 1, wobei die verbleibende Lieferzeit eine verbleibende Zeit eines Verwerfungszeitgebers ist, der einem Paketdatenkonvergenzprotokoll, PDCP, zugeordnet ist, und wobei der Verwerfungszeitgeber bei Empfang von Daten von einer oberen Schicht gestartet wird.

4. Verfahren nach Anspruch 1,
wobei die Fähigkeit eine Basisfähigkeit pro Endgerät umfasst und
wobei die RRC-Rekonfigurationsnachricht ferner Informationen über den Schwellenwert umfasst, der der verbleibenden Lieferzeit zugeordnet ist.

5. Verfahren, durchgeführt durch eine Basisstation in einem drahtlosen Kommunikationssystem, wobei das Verfahren Folgendes umfasst:
Empfangen (210), von einem Endgerät, einer Nachricht, die Informationen über eine Fähigkeit umfasst, eine duale Priorität eines logischen Kanals, LCH-Priorität, zu unterstützen, die eine LCH-Priorität darstellt, die dazu in der Lage ist, von einer primären Priorität auf eine sekundäre Priorität angepasst zu werden;
Identifizieren mindestens eines LCH, der mit der dualen LCH-Priorität konfiguriert ist; und
Übertragen (220), an das Endgerät, einer Funkressourcensteuerungs-Rekonfigurationsnachricht, RRC-Rekonfigurationsnachricht, die Informationen über die duale LCH-Priorität für den mindestens einen LCH umfasst,
wobei, falls die verbleibende Lieferzeit beliebiger Uplink-Daten, UL-Daten, eines LCH kleiner als ein Schwellenwert ist, die sekundäre Priorität für den LCH in einer logischen Kanalpriorisierungsprozedur, LCP-Prozedur, angewendet wird (230).

6. Verfahren nach Anspruch 5,
wobei, falls die verbleibende Lieferzeit von keinen der UL-Daten des LCH kleiner als der Schwellenwert ist, die primäre Priorität für den LCH in der LCP-Prozedur angewendet wird.

7. Verfahren nach Anspruch 5,
wobei die verbleibende Lieferzeit eine verbleibende Zeit eines Verwerfungszeitgebers ist, der einem Paketdatenkonvergenzprotokoll, PDCP, zugeordnet ist, und wobei der Verwerfungszeitgeber bei Empfang von Daten von einer oberen Schicht gestartet wird,
wobei die Fähigkeit eine Basisfähigkeit pro Endgerät umfasst und
wobei die RRC-Rekonfigurationsnachricht ferner Informationen über den Schwellenwert umfasst, der der verbleibenden Lieferzeit zugeordnet ist.

8. Endgerät in einem drahtlosen Kommunikationssystem, wobei das Endgerät Folgendes umfasst:
einen Sendeempfänger (300); und
mindestens einen Prozessor (310), der mit dem Sendeempfänger (300) gekoppelt ist und zu Folgendem konfiguriert ist:
Übertragen, an eine Basisstation, einer Nachricht, die Informationen über eine Fähigkeit umfasst, eine duale Priorität eines logischen Kanals, LCH-Priorität, zu unterstützen, die eine LCH-Priorität darstellt, die dazu in der Lage ist, von einer primären Priorität auf eine sekundäre Priorität angepasst zu werden,
Empfangen, von der Basisstation, einer Funkressourcensteuerungs-Rekonfigurationsnachricht, RRC-Rekonfigurationsnachricht, die Informationen über die duale LCH-Priorität für mindestens einen LCH umfasst,
basierend auf den Informationen über die duale LCH-Priorität für den mindestens einen LCH, Identifizieren eines LCH, der mit der dualen LCH-Priorität konfiguriert ist, und
falls die verbleibende Lieferzeit beliebiger Uplink-Daten, UL-Daten, des LCH kleiner als ein Schwellenwert ist, Anwenden der sekundären Priorität für den LCH in einer logischen Kanalpriorisierungsprozedur, LCP-Prozedur.

9. Endgerät nach Anspruch 8, wobei der mindestens eine Prozessor ferner zu Folgendem konfiguriert ist:
falls die verbleibende Lieferzeit von keinen der UL-Daten des LCH kleiner als der Schwellenwert ist, Anwenden der primären Priorität für den LCH in der LCP-Prozedur.

10. Endgerät nach Anspruch 8, wobei die verbleibende Lieferzeit eine verbleibende Zeit eines Verwerfungszeitgebers ist, der einem Paketdatenkonvergenzprotokoll, PDCP, zugeordnet ist, und wobei der Verwerfungszeitgeber bei Empfang von Daten von einer oberen Schicht gestartet wird.

11. Endgerät nach Anspruch 8,
wobei die Fähigkeit eine Basisfähigkeit pro Endgerät umfasst und
wobei die RRC-Rekonfigurationsnachricht ferner Informationen über den Schwellenwert umfasst, der der verbleibenden Lieferzeit zugeordnet ist.

12. Basisstation in einem drahtlosen Kommunikationssystem, wobei die Basisstation Folgendes umfasst:
einen Sendeempfänger (400); und
mindestens einen Prozessor (410), der mit dem Sendeempfänger (400) gekoppelt ist und zu Folgendem konfiguriert ist:
Empfangen, von einem Endgerät, einer Nachricht, die Informationen über eine Fähigkeit umfasst, eine duale Priorität eines logischen Kanals, LCH-Priorität, zu unterstützen, die eine LCH-Priorität darstellt, die dazu in der Lage ist, von einer primären Priorität auf eine sekundäre Priorität angepasst zu werden,
Identifizieren mindestens eines LCH, der mit der dualen LCH-Priorität konfiguriert ist, und
Übertragen, an das Endgerät, einer Funkressourcensteuerungs-Rekonfigurationsnachricht, RRC-Rekonfigurationsnachricht, die Informationen über die duale LCH-Priorität für den mindestens einen LCH umfasst,
wobei, falls die verbleibende Lieferzeit beliebiger Uplink-Daten, UL-Daten, eines LCH kleiner als ein Schwellenwert ist, die sekundäre Priorität für den LCH in einer logischen Kanalpriorisierungsprozedur, LCP-Prozedur, angewendet wird.

13. Basisstation nach Anspruch 12, wobei, falls die verbleibende Lieferzeit von keinen der UL-Daten des LCH kleiner als der Schwellenwert ist, die primäre Priorität für den LCH in der LCP-Prozedur angewendet wird.

14. Basisstation nach Anspruch 12, wobei die verbleibende Lieferzeit eine verbleibende Zeit eines Verwerfungszeitgebers ist, der einem Paketdatenkonvergenzprotokoll, PDCP, zugeordnet ist, und wobei der Verwerfungszeitgeber bei Empfang von Daten von einer oberen Schicht gestartet wird.

15. Basisstation nach Anspruch 12, wobei die Fähigkeit eine Basisfähigkeit pro Endgerät umfasst und
wobei die RRC-Rekonfigurationsnachricht ferner Informationen über den Schwellenwert umfasst, der der verbleibenden Lieferzeit zugeordnet ist.

## Revendications

1. Procédé réalisé par un terminal dans un système de communication sans fil, le procédé comprenant :
la transmission (210), à une station de base, d'un message comprenant des informations sur une capacité à prendre en charge une double priorité de canal logique, LCH, représentant une priorité LCH pouvant être réglée d'une priorité primaire à une priorité secondaire ;
la réception (220), en provenance de la station de base, d'un message de reconfiguration de commande de ressource radio, RRC, comprenant des informations sur la double priorité LCH pour au moins un LCH ;
sur la base des informations sur la double priorité LCH pour l'au moins un LCH, l'identification d'un LCH configuré avec la double priorité LCH ; et
dans le cas où le temps de livraison restant de toute donnée de liaison montante, UL, du LCH est inférieur à un seuil, l'application (230) de la priorité secondaire pour le LCH dans une procédure de priorisation de canal logique, LCP.

2. Procédé de la revendication 1, comprenant en outre :
dans le cas où le délai de livraison restant d'aucune des données UL du LCH n'est inférieur au seuil, l'application de la priorité primaire pour le LCH dans la procédure LCP.

3. Procédé de la revendication 1, dans lequel le temps de livraison restant est un temps restant d'un temporisateur d'élimination associé à un protocole de convergence de données par paquets, PDCP, et le temporisateur d'élimination étant démarré à la réception de données en provenance d'une couche supérieure.

4. Procédé de la revendication 1,
dans lequel la capacité comprend une capacité de base par terminal, et
dans lequel le message de reconfiguration RRC comprend en outre des informations sur le seuil associé au temps de livraison restant.

5. Procédé réalisé par une station de base dans un système de communication sans fil, le procédé comprenant :
la réception (210), en provenance d'un terminal, d'un message comprenant des informations sur une capacité à prendre en charge une double priorité de canal logique, LCH, représentant une priorité LCH pouvant être réglée d'une priorité primaire à une priorité secondaire ;
l'identification d'au moins un LCH configuré avec la double priorité LCH ; et
la transmission (220), au terminal, d'un message de reconfiguration de commande de ressource radio, RRC, comprenant des informations sur la double priorité LCH pour l'au moins un LCH,
dans lequel, dans le cas où le temps de livraison restant de toute donnée de liaison montante, UL, d'un LCH est inférieur à un seuil, la priorité secondaire est appliquée (230) pour le LCH dans une procédure de priorisation de canal logique, LCP.

6. Procédé de la revendication 5,
dans lequel, dans le cas où le temps de livraison restant d'aucune des données UL du LCH n'est inférieur au seuil, la priorité primaire est appliquée pour le LCH dans la procédure LCP.

7. Procédé de la revendication 5,
dans lequel le temps de livraison restant est un temps restant d'un temporisateur d'élimination associé à un protocole de convergence de données par paquets, PDCP, et le temporisateur d'élimination étant démarré à la réception de données en provenance d'une couche supérieure,
dans lequel la capacité comprend une capacité de base par terminal, et
dans lequel le message de reconfiguration RRC comprend en outre des informations sur le seuil associé au temps de livraison restant.

8. Terminal dans un système de communication sans fil, le terminal comprenant :
un émetteur-récepteur (300) ; et
au moins un processeur (310) couplé à l'émetteur-récepteur (300) et configuré pour :
transmettre, à une station de base, un message comprenant des informations sur une capacité à prendre en charge une double priorité de canal logique, LCH, représentant une priorité LCH pouvant être réglée d'une priorité primaire à une priorité secondaire,
recevoir, en provenance de la station de base, un message de reconfiguration de commande de ressource radio, RRC, comprenant des informations sur la double priorité LCH pour au moins un LCH,
sur la base des informations sur la double priorité LCH pour l'au moins un LCH, identifier un LCH configuré avec la double priorité LCH, et
dans le cas où le temps de livraison restant de toute donnée de liaison montante, UL, du LCH est inférieur à un seuil, appliquer la priorité secondaire pour le LCH dans une procédure de priorisation de canal logique, LCP.

9. Terminal de la revendication 8, dans lequel l'au moins un processeur est en outre configuré pour :
dans le cas où le délai de livraison restant d'aucune des données UL du LCH n'est inférieur au seuil, appliquer la priorité primaire pour le LCH dans la procédure LCP.

10. Terminal de la revendication 8, dans lequel le temps de livraison restant est un temps restant d'un temporisateur d'élimination associé à un protocole de convergence de données par paquets, PDCP, et le temporisateur d'élimination étant démarré à la réception de données en provenance d'une couche supérieure.

11. Terminal de la revendication 8,
dans lequel la capacité comprend une capacité de base par terminal, et
dans lequel le message de reconfiguration RRC comprend en outre des informations sur le seuil associé au temps de livraison restant.

12. Station de base dans un système de communication sans fil, la station de base comprenant :
un émetteur-récepteur (400) ; et
au moins un processeur (410) couplé à l'émetteur-récepteur (400) et configuré pour :
recevoir, en provenance d'un terminal, un message comprenant des informations sur une capacité à prendre en charge une double priorité de canal logique, LCH, représentant une priorité LCH pouvant être réglée d'une priorité primaire à une priorité secondaire,
identifier au moins un LCH configuré avec la double priorité LCH, et
transmettre, au terminal, un message de reconfiguration de commande de ressource radio, RRC, comprenant des informations sur la double priorité LCH pour l'au moins un LCH,
dans laquelle, dans le cas où le temps de livraison restant de toute donnée de liaison montante, UL, d'un LCH est inférieur à un seuil, la priorité secondaire est appliquée pour le LCH dans une procédure de priorisation de canal logique, LCP.

13. Station de base de la revendication 12, dans laquelle, dans le cas où le temps de livraison restant d'aucune des données UL du LCH n'est inférieur au seuil, la priorité primaire est appliquée pour le LCH dans la procédure LCP.

14. Station de base de la revendication 12, dans laquelle le temps de livraison restant est un temps restant d'un temporisateur d'élimination associé à un protocole de convergence de données par paquets, PDCP, et le temporisateur d'élimination étant démarré à la réception de données en provenance d'une couche supérieure.

15. Station de base de la revendication 12, dans laquelle la capacité comprend une capacité de base par terminal, et
dans laquelle le message de reconfiguration RRC comprend en outre des informations sur le seuil associé au temps de livraison restant.
